# EUROPEAN PATENT SPECIFICATION

(11) **EP 3 628 834 B1**
(45) Date of publication and mention of the grant of the patent: **03.11.2021**
(21) Application number: 18197410.6
(22) Date of filing: 28.09.2018
(51) Int. Cl.: F01N 3/20, F01N 13/18, F01N 13/08, F16K 1/16, F16K 1/22

(54) **VALVE FOR AN EXHAUST HOUSING AND EXHAUST HOUSING OF A LARGE SHIP**
VENTIL FÜR EIN ABGASGEHÄUSE UND ABGASGEHÄUSE EINES GROSSEN SCHIFFES
SOUPAPE DESTINÉE À UN CARTER D'ÉCHAPPEMENT ET CARTER D'ÉCHAPPEMENT D'UN GRAND NAVIRE

(43) Date of publication of application: 01.04.2020
(73) Proprietor: Winterthur Gas & Diesel Ltd., 8401 Winterthur (CH)
(72) Inventor: Sönnichsen, Samuel, 8405 Winterthur (CH)
(74) Representative: Hepp Wenger Ryffel AG

(56) References cited:
- EP-A1- 2 807 354
- EP-A1- 3 121 401
- EP-A2- 0 790 447
- DE-A1-102009 060 589
- DE-T2- 69 830 920
- US-A1- 2006 283 181

## Description

The present invention is directed to a valve for an exhaust housing and an exhaust housing of a large ship according to the preamble of the independent claims.

Large ships, in particular vessels for transport of goods, usually are powered by internal combustion engines, in particular diesel or gas engines, mostly two-stroke, cross head engines. In case of diesel being burned by the engine, the exhaust from this combustion process needs to be cleaned to comply with the existing rules such as IMO Tier III.

Depending on applicable rules, fuel used, power level of the engine and further factors the exhaust needs to be treated with different systems. Therefore, the exhaust needs to be divertible in different directions within the exhaust system of a ship engine.

It is known to have valves in an exhaust manifold for directing exhaust into a desired direction. Usually, those valves are bought as finished parts and inserted into the respective exhaust pipe at a position needed. Those valves have a constriction in cross-section which leads to a reduction of exhaust volume passing. The installation of a standard valve is space consuming and needs a lot of installation time.

EP3121401 A1 discloses an exhaust system comprising a bypass and a path switching member including a main side switching valve and a bypass side switching valve. A valve body is arranged on a driving shaft which extends through a circular frame. The valves are driven by valve drivers arranged outside the frame and outside a housing which is mounted in a pipe.

EP2807354 A1 discloses an exhaust gas system comprising a flow passage switching device for opening and closing of first and second gas outlets. Two tabular valves are arranged for closing and opening of the outlets via a rod arrangement. The driving of the rod and valve arrangement may be by a motor or a hydraulic arrangement arranged outside a housing of the switching device.

US2006/283181 A1 discloses an emission abatement device with a variable swirler. The swirler comprises twistable vanes mounted within a stationary frame and being driven by a pitch adjuster arranged outside the frame. The vanes pivot about a vane axis.

DE102009060589 A1 concerns an arrangement for controlling a gas flow. A plurality of lamellas is arranged in a rectangular frame. The lamellas are arranged on respective axis with extend through the frame and which may be connected to each other.

EP0790447 A relates to a valve having three vanes mounted within a circular throat of a valve body for rotation between open and closed positions.

DE69830920 T2 discloses a catalytic converter comprising a frame. Louvred flaps are arranged on the front and on the back of the frame.

It is therefore an object of the present invention to prevent the drawbacks of the prior art and create a valve for an exhaust housing and an exhaust housing of a large ship ensuring quick and easy installation, being durable and space saving.

The object is achieved by a valve for an exhaust housing of a ship, in particular large vessel, comprising a frame at least having a first and a second side element. The valve comprises at least one flap having a flap rotary axis, the at least one flap being arranged inside the frame. The valve comprises an activation element for turning the at least one flap at least partially around a flap rotary axis. The activation element is arranged outside the frame and at a distance D from the first side element such that a structural element of the exhaust housing is arrangeable between activation element and side element.

By arranging the activation element outside of the exhaust housing, the activation element is not in contact with any exhaust and therefore the valve is durable. Furthermore, the cross section of the valve is maximized due to the activation element not taking any place inside the exhaust housing. Furthermore, the flap rotary axis is easily fixed in the frame and the structural element is furthermore easily connected to the flap rotary axis such that the complete valve is securely positioned and easily activatable inside an exhaust housing. The distance D is defined as the distance between the outer edge of the side element and an activation element or a linkage.

An exhaust housing according to this invention can be any housing in which exhaust is collected or flowing. The exhaust housing can be only an exhaust manifold or an exhaust pipe. The exhaust housing further can be a combined housing for an exhaust manifold and exhaust pipes as well as for example exhaust cleaning devices such as selective catalytic reduction reactors.

According to the invention the distance D is in a range between 30 mm to 300 mm, in particular 50 mm to 100 mm, preferably substantially 70 mm.

In this distance a structural element of the exhaust path is arrangeable between activation and side element.

The flap rotary axis can be arranged essentially in the middle of the flap and extend a longer longitudinal axis of the flap.

This way the torque is reduced and the flap can easily be turned.

The valve can comprise at least two, preferably three, more preferably four, in particular six, flaps. It is further conceivable to have more than six flaps.

This leads to an optimal distribution of opening cross section and torque on a flap rotary axis.

The flap rotary axis can have a length LR which corresponds to at least 105%, preferably at least 110%, more preferably at least 120% of the lengths of the flap FL.

This enables the connection of a structural element of an exhaust housing and an activation element to turn the flaps without losing cross section for exhaust inside the valve.

The flap rotary axis comprises two parts, which are connectable to each other through an opening of the structural element of the exhaust housing, wherein a first part essentially is arranged inside the frame and a second part essentially is arranged outside the frame and preferably connected to the activation element.

This design enables an easy installation of the valve since the first part of the valve can be positioned inside the exhaust housing comprising the first part of the flap rotary axis and afterwards the second part of the flap rotary axis can be connected to the first part of the flap rotary axis when the first part of the flap rotary axis is already installed in the exhaust housing. This leads to significantly reduced installation costs.

The connection between the first part and the second part of the flap rotary axis can be a hex key connection.

By using a hex key connection the rotary movement of the flap rotary axis is reliably transferred from the second part to the first part of the flap rotary axis and furthermore the installation of the complete flap rotary axis is extremely easy. Furthermore any angular deviations of the second part relative to the first part, for example by thermal expansion, can be easily compensated since the hex key connection allows for angular deviations.

As a matter of course similar connections like hex key connections such as square keys, octagonal keys or triangular keys can be used to connect the first part and the second part of the flap rotary axis.

The lengths of the first part of the flap rotary axis can be longer than the lengths of the second part of the flap rotary axis.

This enables an easy installation and simultaneously a stable flap rotary axis.

The flap rotary axis can be arranged in bearings in the side elements, preferably in a ceramics slide bearing and/or a graphite slide bearing.

A bearing in the side elements leads to a secure guiding of the turning movement of the flap rotary axis.

Ceramic or graphite bearings have a high durability even in the challenging exhaust surroundings of an exhaust housing, in particular in temperatures above 500°C.

The flap rotary axis can be arranged in at least one additional bearing inside the frame in between the side elements, preferably in a ceramics slide bearing and/or a graphite slide bearing.

For this purpose the frame additionally comprises a middle element being arranged substantially in parallel to the side elements which comprises the at least one bearing. As a matter of course there can be more than one middle element arranged inside the frame in case more stability of the flap rotary axis is needed.

The frame preferably comprises a top and a bottom element to increase the stability of the valve.

The object is additionally achieved by an exhaust housing of a large ship, in particular a large vessel, comprising a valve section and at least one valve as previously described. The valve section comprises at least one structural element. The at least one flap rotary axis extends through an opening in the valve section, preferably the structural element.

The valve section of an exhaust housing is a section in which a valve can be positioned. The valve section comprises a structural element, in which the rotary axis can be arranged and which comprises enough stability such that the flap rotary axis can be turned in a stable way. The structural element therefore at least has a width of 50 mm such that a rotary axis having a diameter of 25 mm can be securely positioned in the structural element.

The valve section can be a structural plate of the exhaust housing.

This way the structural plate can be simultaneously used as connection point for the flap rotation axis.

The activation elements can be arranged outside the exhaust housing.

This way the activation elements are not in contact with exhaust and therefore more durable.

The valve can be arranged in the high pressure area of the engine and particular upstream of an SCR reactor.

In this high demanding surrounding of the exhaust housing the valve can optimally fulfill its function and is still very durable.

The activation elements can be electrical motors.

Electrical motors are easily controlled and easily exchanged. Furthermore, they are comparably cheap and can be bought as standard parts.

The structural element can comprise four openings, each opening accommodates one flap rotary axis.

This leads to a possibility to place a valve with four flaps in the exhaust housing.

The exhaust housing can comprise three or more valves, in particular seven valves.

This leads to the possibility to direct exhaust to one or two exhaust treatment devices or to direct the exhaust directly to the outlet of the exhaust housing. After the outlet, the exhaust is preferably directed to a turbocharger.

The exhaust housing may comprise a passive valve that allows only one flow direction and closes and/or opens by a counter pressure. For example the valve closes due to a gravitational force on a flap and/or due to a restoring force of a spring and opens due to a pressure by the exhaust gas.

The exhaust housing may comprise a measuring device for measuring the opening degree of the valve.

For example the measuring device may detect the distance between a moveable valve body and a fixedly arranged valve seat. Preferably the measuring device comprises a sensor for measuring the angular position of at least one valve flap, for example the angular position of an exhaust gas damper.

The more the valve is open, the more gas may flow through the valve. Hence, the opening degree of the valve may be used as a measure for the volume of gas flowing through the valve.

In case the valve is a passive or at least partially passive valve, the opening degree may be used as a measure for the pressure on the valve due to the gas flow, and hence for the gas flow velocity.

In an advantageous embodiment of the system the exhaust housing comprises a control unit for determining the exhaust gas flow velocity on the basis of the opening degree of the valve, preferably of the angular position of at least one valve flap.

The control unit may comprise a rule or a map which may be stored in the storage of the control unit and by which a correlation between the measured opening degree and the gas flow velocity may be deduced.

As also the opening area of the flap may be determined from the opening degree, the volume flow can be determined. Usually an exhaust gas temperature and a pressure of the temperature are measured in a combustion engine. Thus also the density of the exhaust and the mass flow may be calculated.

The mass flow can otherwise only be determined by very expensive ultrasonic devices, or with a Prandtl pipe or an impeller, which are difficult to be used in a continuous measurement. Especially in an environment with a high particle mass flow contamination may be provoked which can only be eliminated with a great deal of maintenance effort.

Preferably the exhaust housing comprises a temperature sensor and a pressure sensor.

Preferably the exhaust housing further comprises a control unit for determining the exhaust gas mass flow on the basis of the temperature, the pressure and the opening degree, preferably the angular position of a flap.

In a preferred embodiment the exhaust housing comprises a dosing unit for a reducing agent. The exhaust housing or the large vessel engine further comprises a control unit for determining the amount of reducing agent on the basis of the opening degree, preferably the angular position.

The control unit may also determine the exhaust gas mass flow on the basis of the temperature, the pressure and the opening degree.

The dosing unit may comprise or be connected to a reservoir containing the reducing agent.

Preferably the reducing agent is injectable into an exhaust gas inlet by means of a nozzle of the dosing unit.

Depending on the opening degree of the valve, the pressure and the temperature in the exhaust gas aftertreatment system, a mass flow may be determined.

The legislation requires a certain NOₓ value measured in g/kWh downstream a SCR reactor or downstream a turbocharger which is fed by the exhaust gas aftertreatment system, in particular downstream of the funnel of the vessel. To achieve the correct amount of NOₓ, it is necessary to know the amount of NOₓ upstream of the SCR reactor and to dose the reducing agent properly.

The quantity to be dosed depends on the mass flow of the exhaust gas, the engine load and the relative content of NOₓ, measured in ppm/m³, of the exhaust gas entering the aftertreatment system.

The relative NOₓ content may be measured and/or may be determined according to a model or according to an empirical map depending on the current operating conditions of the combustion engine.

The models or maps may be stored in the control unit or may be available to the control unit.

The difference between the measured NOₓ content and the limit given by legislation determines the amount of the reducing agent to be dosed.

In an advantageous embodiment the exhaust housing comprises at least one set of valve flaps, preferably at least one valve with at least one set of valve flaps. The exhaust housing may further comprise at least one sensor for measuring the angular position of at least one of the valve flaps in the set of valve flaps.

Preferably the set of valve flaps is arranged downstream of a SCR-reactor.

Advantageously the exhaust housing comprises at least one set of valve flaps, preferably being arranged downstream of the SCR-reactor, wherein the valve flaps of the set are connected to each other, preferably by a connector. Preferably the flaps are connected, such that all valve flaps have the same angular position.

The flaps perform a coupled movement, preferably all having the same opening degree at a time. Hence, the flow through all flaps is evenly distributed.

The sensor only needs to detect the opening degree of one of the flaps for determining the opening degree of the valve.

In a beneficial embodiment the exhaust housing comprises a pretensioned valve, in particular at least one valve flap wherein the valve flap is pretensioned, for example by a spring, in particular a torsional spring.

Hence, the valve is prevented from shaking or flattering due to flow turbulences and the opening degree is a trustworthy measure for the amount of the exhaust gas flowing through the exhaust housing.

The measuring device may comprise a sensor.

The sensor may detect a distance between two elements of a valve, preferably two closing elements. The sensor may also detect an opening angle of a valve closing element. The sensor may also detect a distance or an angle of a valve actuating element with respect to a fixed valve element.

The sensor may be arranged within the exhaust housing or may be arranged externally. The sensor may detect the position of an outside element, for example the second part of the flap rotary axis essentially being arranged outside the frame. Hence the measuring device and/or the sensor may be arranged in a cold area, and the measurement is not disturbed by the exhaust gas.

The sensor may be an optical sensor, an acoustical sensor, a magnetic sensor or an electro-magnetic sensor.

The measuring device may comprise a video device and an evaluation unit for analysing the video signal.

The exhaust housing may comprise at least one valve flap and a sensor for measuring the momentum of the at least one valve flap. In particular a momentum caused by a spring force pretensioning the valve may be measured. The momentum is correlated to the dynamic pressure on the valve and hence to the opening degree. Hence a sensor for measuring the momentum can also be regarded as a sensor for measuring the opening degree.

The flow velocity can be deduced from a measurement of the momentum.

Preferably the at least one valve of the exhaust housing comprises at least one valve flap and the at least one valve flap closes due to gravity.

The valve flap hence does not need a powerful actuating system. The complete closure movement or at least a relevant part of the closure movement is caused by the weight of the flap.

The valve may be connected to an actuating system to provide a complete closing, especially since the exhaust gas aftertreatment system might not keep constantly a perfectly oriented position.

In an ideal position, for example when the vessel, in which the exhaust housing is installed, is in a harbour, the exhaust housing may be oriented, such that the flaps are in a completely closed position without any gas pressure and the flaps are only opened when there is an exhaust gas pressure.

However, when the vessel is on its way or when the vessel is not optimally loaded, the orientation of the housing may deviate from the optimal orientation.

In this case the direction of the restoring force may vary and the opening degree of a valve flap may not only be influenced by the pressure due to gas flow but also by the orientation of the valve with respect to gravity.

Hence in a preferred embodiment of the system the exhaust housing or the large vessel engine comprises a measuring device for determination of the spatial orientation of the valve with respect to the direction of the gravity vector.

In particular the measuring device may determine the deviation of a current orientation of a valve element which is fixedly connected to the exhaust housing or engine, for example a closing face of a valve flap, with respect to the gravity vector.

The measuring device may be a gyroscope.

For the calculation of the opening force due to a gas pressure not only the opening degree of the valve but also its position with respect to the gravity sensor should be taken into account, since the opening degree might not only be influenced by the gas.

The control unit may use the measurement values of the spatial orientation for correcting the calculation of the exhaust gas flow velocity and/or for correcting the calculation of the mass flow.

The object is further achieved by a method of installing a valve in an exhaust housing comprising the steps of
- positioning a valve as previously described in an exhaust housing,
- positioning the first part of the at least one flap rotary axis of the valve such that the second part of the flap rotary axis is connectable with the first part through an opening an a structural element of the exhaust housing,
- connecting the first part of the flap rotary axis with the second part of the flap rotary axis.

This way the valve can be easily installed.

An activation element can be connected to the at least one flap rotary axis. Preferably, all flap rotary axes are activated by just one activation element, the motion being transferred by a linkage such that all flaps are opened and closed simultaneously.

The exhaust housing, as described previously, may have at least one housing inlet for an exhaust gas of the internal combustion engine and at least one housing outlet for the exhaust gas. The housing may comprise an exhaust manifold and a first exhaust treatment area. The exhaust manifold may include the at least one housing inlet and at least one manifold outlet for guiding the exhaust gas to the first exhaust treatment area. The first exhaust gas treatment area may comprise a first and a second duct. A first exhaust treatment section may be arranged in the first duct and a second exhaust treatment section may be arranged in the second duct. The first exhaust gas treatment area further may comprise a bifurcation for splitting the exhaust gas into a first part for the first duct and a second part for the second duct. The bifurcation may be arranged upstream of the first and second duct.

The first duct may comprise a primary flow constriction, such that a flow distribution of the first and second duct is optimized.

Under normal operating conditions, without a flow constriction, a flow into one of the exhaust treatment sections may be larger than into the other. This leads in particular in asymmetric exhaust housings to a shortened lifetime of particular catalytic sections.

As a result of the flow constriction, a flow into the first exhaust treatment section is decreased while a flow into the second exhaust treatment section is increased. Thereby, the flow distribution between the first and second exhaust treatment sections can be optimized. For example, in one embodiment, the flow constriction may be arranged such that a flow into the first and second catalytic section is substantially equal.

One or all of the exhaust treatment section(s) may be a catalytic section. A catalytic section comprises a catalyst for a selective catalytic reaction (SCR). In alternative embodiments, the exhaust treatment sections may treat the exhaust gas in a selective non-catalytic reaction (SNCR). The catalytic section may comprise one or more layers. The layers may be standard and individually replaceable components.

The first and the second duct may be arranged in parallel. "In parallel" is understood as separating the exhaust gas into two streams. In particular embodiments, the first duct and the second duct guide a fluid at least partially substantially along the same direction. In other embodiments, the first and second ducts guide the fluid in opposing directions.

The exhaust gas treatment area may include a separation region or a division part or a furcation for separating the exhaust gas into the first part for the first duct and the second part for the second duct.

The bifurcation may separate the exhaust gas into two, three, or more parts. The first and the second duct a preferably adapted to guide the exhaust gas separately.

An inlet of the second duct may be arranged upstream of an inlet of the first duct. In such exhaust housings, guiding the flow distribution is particularly advantageous because the flow tends to concentrate in the downstream ducts. In these ducts the catalytic elements deplete faster due to the larger flow velocity.

In one embodiment, the exhaust first and second duct may be formed as a Z-type or U-Type manifold. The first and second duct may merge at their respective ends. Alternatively, the first and second duct may lead to separate exhaust housing outlets.

The flow constriction may be arranged at an inlet of the first duct, along the first duct or at an outlet of the first duct. In a preferred embodiment, the flow constriction is arranged at an inlet of the first duct. As a result of a pressure drop after the flow constriction, a pressure in the first exhaust treatment section is lower.

The exhaust manifold may additionally comprise a bypass. The bypass may be opened and closed with one or more bypass valves. The bypass valves may be arranged at an outlet of the exhaust manifold. The bypass bypasses the exhaust treatment sections. Thereby, the exhaust gas is directly guided from the exhaust manifold inlet to the exhaust housing outlet. This allows an energy saving configuration of the exhaust manifold.

A controller might be configured to control the valves such that in a first valve configuration the exhaust gas is guided through the first and second exhaust treatment sections and in a second valve configuration the exhaust gas is guided through the bypass.

The first and/or second duct may comprise a duct outlet valve. Thereby, only selected ducts may be operated. For example, if the catalytic elements in one of the catalytic sections are defective, the duct comprising this catalytic section may be closed.

Further, the exhaust manifold may comprise a controller configured to close the duct outlet valves, when the bypass is opened. Thereby, a backflow into the first and/or second duct when the bypass is opened may be prevented.

The exhaust manifold may comprise a manifold outlet valve. The manifold outlet valve may be arranged such that a flow into the exhaust gas treatment area or one of or both of the first and second ducts can be blocked when the manifold outlet valve is closed. Alternatively, the first and/or second duct may comprise individual inlet valves.

In one embodiment, the exhaust manifold comprises multiple inlets. The exhaust manifold may also comprise multiple outlets. In a preferred embodiment, the exhaust manifold comprises at least one inlet for each cylinder of the internal combustion engine.

The exhaust gas treatment area may comprise an exhaust gas collection chamber downstream of the first and second duct. The first and second duct may guide the exhaust gas to the gas collection chamber. The at least one exhaust manifold outlet may be arranged in the exhaust gas collection chamber. The exhaust gas collection chamber allows a mixing of the exhaust gas after the treatment of the exhaust gas.

Each catalytic section may comprise at least one catalytic element. The catalytic elements may be replaceable. The catalytic sections and/or the catalytic elements may be standard components and/or may have equal sizes. Thereby, a replacement of single catalytic sections and/or catalytic elements is particularly simple. The catalytic elements may be catalytic layers.

In one embodiment the first and second catalytic section may comprise two or three or more catalytic elements. Preferably both catalytic sections comprise two or three or more catalytic elements.

In one embodiment, the flow constriction is formed by at least one of: a baffle plate, a perforated plate, a valve, in particular a plate valve, one or more flaps and a constriction of a cross-section of the first duct. In one embodiment, the flow constriction is formed by a plate, which covers a part of the cross-section of the first duct.

The perforated plate is a preferred embodiment. A perforated plate is particularly simple and easy to make. Further, a retrofitting, i.e. adding a perforated plate to existing exhaust manifolds, is particularly simple.

As used herein, a perforated plate is a plate with one or more perforations through which a fluid can flow. The perforations may be circular, elliptical, squares, triangles, or any other suitable shape. In a preferred embodiment the perforations are regular and evenly distributed over the perforated plate. In one embodiment the perforations may be formed by elongated slits. In an alternative embodiment the perforated plate may comprise only one hole.

In one embodiment, the flow constriction is adjustable. Thereby, the flow constriction can be adjusted to the current fluid stream and balance the stream at any throughput. The flow constriction may in particular be a variable perforated plate.

The perforated plate may be variable for example by arranging two perforated plates above one another. One of the perforated plates may be moved relatively to the other to close some or all of the perforations. The perforated plate may be actuated actively, for example by a motor. Alternatively, the perforated plate may be actuated passively, for example by connecting to perforated plates with springs. Thereby, the perforated plate opens further, if a pressure increases.

As used herein, a baffle plate is a plate used to redirect a direction of a flow of a fluid.

In one embodiment, the flow constriction is designed such that turbulences are introduced. Turbulences may be introduced by varying the size of the perforations in relation to the cross-section of the first duct. Preferred ratios between a cross-section of the first duct immediately before the constriction and at the flow constriction are between 5% and 60%, further preferred between 10% and 40%.

A size of the flow constriction (i.e. an area of a smallest flow cross-section) may also be chosen in relation to a mass flow through the exhaust gas manifold. The exhaust housing may comprise an interface to receive information regarding the mass flow of exhaust gas from the engine. Additionally or alternatively the exhaust manifold may comprise a flow sensor. The flow sensor may be positioned at the exhaust manifold inlets and/or in one or more or all of the ducts. According to this information the flow constriction may be adjusted.

In one embodiment the flow constriction is a perforated plate which is arranged perpendicular to an intended flow direction. This is a particularly simple arrangement for the primary flow constriction.

The first exhaust treatment section may have a first capacity and the second exhaust treatment section may have a second capacity. The flow constriction may be designed such that a ratio of a volume stream through the first duct divided by a volume stream through the second duct corresponds to a ratio of the capacities of the catalytic section. Thereby, each exhaust treatment section is depleted at the same rate. Preferably, the first and second catalytic sections have the same capacity.

In one embodiment the primary flow constriction is designed, such that a throughput through the first and second exhaust treatment section is substantially equal. As a result, the exhaust gas is distributed evenly and thus an efficiency of the catalytic reaction is improved.

In one embodiment the first and second exhaust treatment section have a substantially equal throughput capacity. The throughput is defined by the size and material properties of each exhaust treatment section and the number of catalytic elements in the respective catalytic section.

In a preferred embodiment, the exhaust housing comprises a second exhaust gas treatment area. The first exhaust gas treatment area is adapted to treat a part of the exhaust gas and the second exhaust gas treatment area is adapted to treat another part of the exhaust gas. The second exhaust gas treatment area includes a third and a fourth duct. Further the second exhaust gas treatment area includes a bifurcation upstream of the third and fourth ducts for splitting the exhaust gas into a third part for the third duct and a fourth part for the fourth duct. A third and a fourth exhaust treatment section are arranged in the third and the fourth duct respectively. A secondary flow constriction is arranged in the third duct such that a flow throughput of the third and the fourth duct is optimized.

Thereby, a capacity of the exhaust manifold may be increased. In addition, second exhaust gas treatment area allows a compact construction of the catalytic sections. Further, a flow between the third and the fourth act is balanced.

In general, the third duct may be constructed similarly to the first duct. All features and particular embodiments mentioned in relation to the first duct also apply to the third duct. The same applies for the fourth and the second duct respectively.

In a preferred embodiment, first and second exhaust treatment areas are arranged symmetrically to each other. Preferably, the first and second exhaust treatment areas are plane symmetric. The first and second exhaust treatment areas may have identical capacities.

The invention is further described in embodiments by means of figures. It shows:
- Fig. 1: shows a schematic view of a valve according to the invention,
- Fig. 2: shows a perspective view of the valve of figure 1,
- Fig. 3: shows an exhaust housing 2 in which a valve 1 is arranged,
- Fig. 4: shows a sectional view through the exhaust housing 2 of figure 3
- Fig. 5: shows a cross section through an exhaust housing according to figure 4.

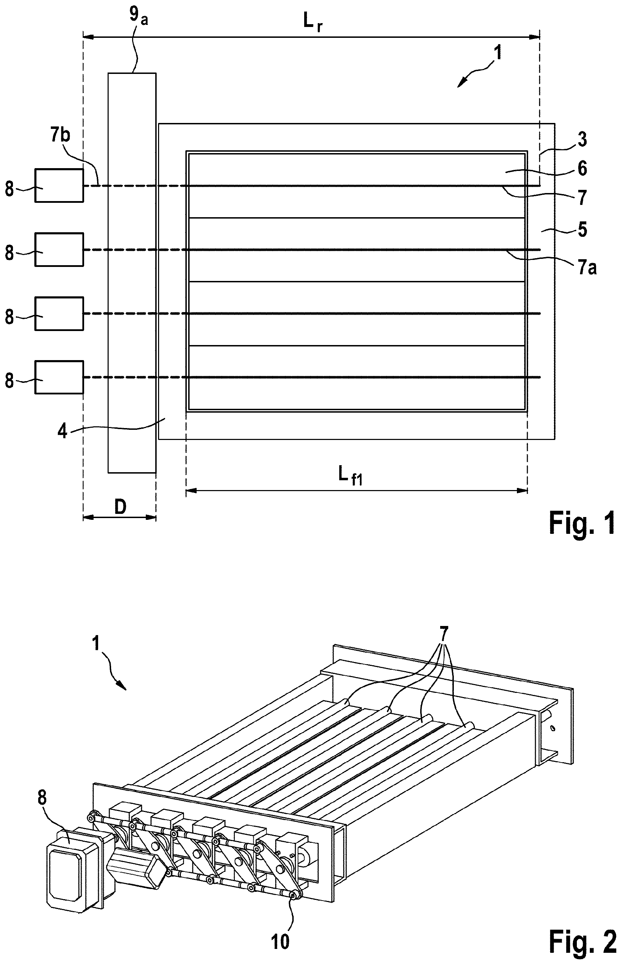

Figure 1 shows a schematic view of the valve 1. The valve 1 comprises a frame 3 at least having a first side element 4 and a second side element 5. Between the side elements 4,5 four flaps 6 are arranged. Each flap 6 is rotatably positioned in the side elements 4,5 by a flap rotary axis 7. The flap rotary axis 7 enables a rotary motion of the flap around the flap rotary axis 7. By turning around the rotary axis 7 the flap can be opened or closed such that the valve is opened or closed. A turning angle of 90° leads to the fully open position of the flap 6 in the valve 1. The flap rotary axis 7 comprises a first part 7a (shown in solid lines) arranged inside the frame 3 and a second part 7b being arranged outside the frame 3. The second part 7b is depicted in dashed lines. By having a split rotary axis 7 a frame 3 can be installed inside an exhaust housing and the rotary axis 7 can be connected afterwards. This leads to a maximum use of the space for the valve and an easy installation possibility.

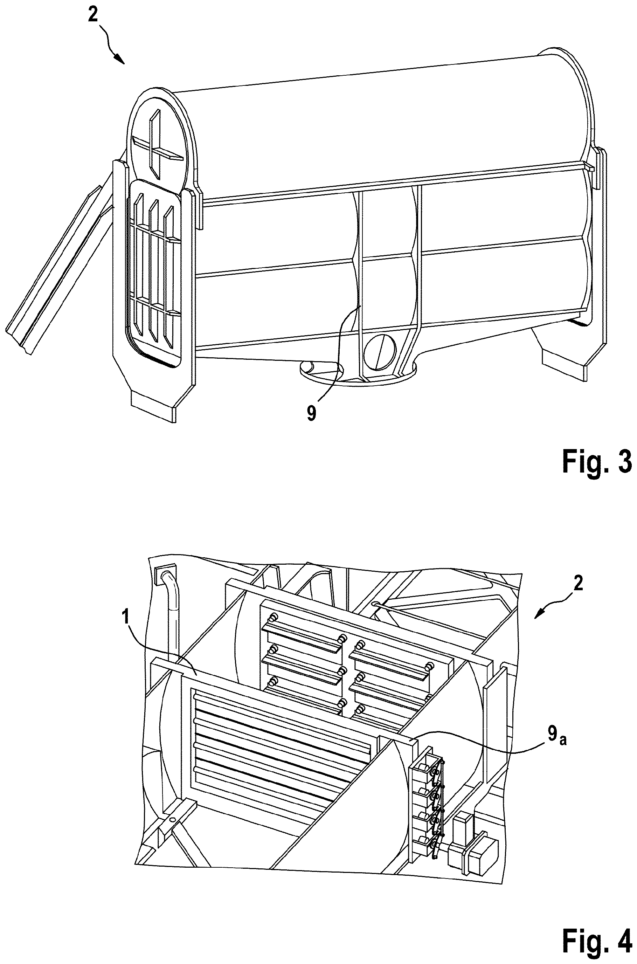

Each flap rotary axis 7 is actuated by an activation element 8. The activation element 8 can be an electrical motor and is arranged at a distance D of 10cm from the first side element 4. The distance D is defined as the distance between the outer edge of the side element 4 and the activation element 8 or the linkage 10 (see figure 3). In the distance D a structural element 9a of an exhaust housing 2 (see figure 3) is arranged in which the second part 7b of the flap rotary axis 7 is arranged. For this purpose the structural element of the exhaust housing 2 comprises openings through which the second part 7b of the flap rotary axis 7 can extend. The flaps 6 have a length L_{fl} of 80 cm while the flap rotary axis 7 has a length Lᵣ of 1m.

Figure 2 shows a perspective view of the valve in Figure 1. Differing from the valve 1 in figure 1 the valve 1 in figure 2 only has one activation element 8 which is connected to the flap rotary axes 7 by a linkage 10. This leads to a more cost effective activation mechanism.

Fig. 3 shows an exhaust housing 2 in which a valve 1 is arranged. The valve 1 is arranged in the structural plate of the wall section 9. The structural plate comprises the structural element 9a (see Fig. 1 and 4). Usually in one exhaust housing 2 there are at least seven valves 1 to enable the control of the flow of exhaust through the right pass through the exhaust housing 2.

Fig. 4 shows a sectional view through the exhaust housing 2 of figure 3. A valve 1 is installed in a structural plate of the exhaust housing 2. The valve 1 corresponds to the valve shown in figure 2.

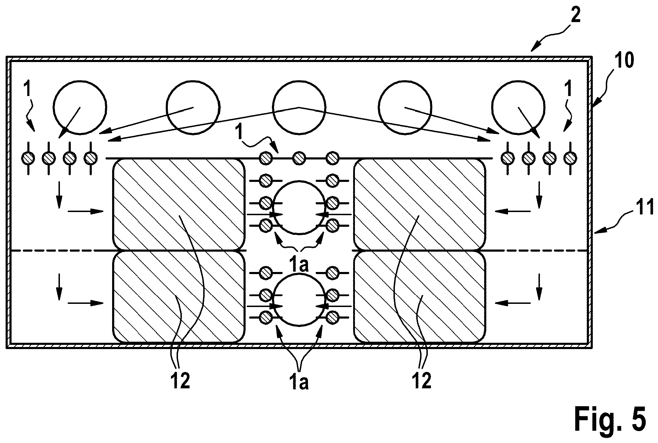

Figure 5 shows a cross section through an exhaust housing according to figure 3. The exhaust housing 2 comprises an exhaust manifold 10 into which five exhaust lines guide exhaust from the valves of the combustion engine. The exhaust manifold 10 is separated from the exhaust treatment area 11 of the exhaust housing 2 by three valves 1. Within the treatment area 11 there are four SCR reactor elements 12. By opening or closing the three valves 1 separating the exhaust manifold 10 from the treatment area 11 the exhaust can be guided to not pass any SCR reactor element 12 at all or pass them partly or pass all of them. The four additional valves 1a can be valves according to this invention but can be simple passive valves such as check valves.

## Claims

1. Valve (1) for an exhaust housing (2) of a ship, in particular a large vessel, comprising a frame (3) at least having a first (4) and a second (5) side element, at least one flap (6) having a flap rotary axis (7), the at least one flap (6) being arranged inside the frame (3) and an activation element (8) for turning the at least one flap at least partially around the flap rotary axis (7), **characterized in that** the activation element (8) is arranged outside the frame (3) and at a distance D in a range between 30 mm to 300 mm, in particular 50 mm to 100 mm, preferably substantially 70 mm, from the first side element (4), such that a structural element of the exhaust housing is arrangeable between activation element (8) and side element (4), wherein the flap rotary axis (7) comprises two parts, which are connectable to each other through an opening of the structural element of the exhaust housing, wherein a first part (7a) essentially is arranged inside the frame and a second part (7b) is essentially arranged outside the frame (3).

2. Valve (1) according to any one of the preceding claims, **characterized in that** the flap rotary axis (7) is arranged essentially in the middle of the flap and extends along a longitudinal axis of the flap.

3. Valve (1) according to any one of the preceding claims, **characterized in that** the valve (1) comprises at least two, preferably three, more preferably four, in particular six, flaps (6).

4. Valve (1) according to any one of the preceding claims, **characterized in that** the flap rotary axis (7) has a length L_{R} which corresponds to at least 105%, preferably at least 110%, more preferably at least 120% of the length of the flap L_{fl}.

5. Valve (1) according to any one of the preceding claims, **characterized in that** the second part (7b) of the flap rotary axis (7) is connected to the activation element (8).

6. Valve (1) according to any one of the preceding claims, **characterized in that** a connection between the first part (7a) and the second part (7b) is hex key connection.

7. Valve (1) according to any one of the preceding claims, **characterized in that** a length of the first part (7a) is longer than a length of the second part (7b).

8. Valve (1) according to any one of the preceding claims, **characterized in that** the flap rotary axis (7) is arranged in bearings in the side elements (4,5), preferably in a ceramic slide bearing and/or a graphite slide bearing.

9. Valve (1) according to any one of the preceding claims **characterized in that** the flap rotary axis (7) is arranged in at least one bearing inside the frame (3) in between the side elements (4,5), preferably in a ceramic slide bearing and/or a graphite slide bearing.

10. Exhaust housing (2) of a large ship, in particular a large vessel, comprising a wall section (9) and at least one valve (1) according to any one of the preceding claims, **characterized in that** the at least one flap rotary axis (7) extends through an opening in the wall section (9).

11. Exhaust housing (2) according to claim 10, **characterized in that** the wall section (9) is a structural plate of the exhaust housing.

12. Exhaust housing (2) according to any one of claims 10 or 11, **characterized in that** the activation elements (8) are arranged outside of the exhaust housing (2).

13. Exhaust housing (2) according to any one of claims 10 to 12 **characterized in that** the valve (1) is arranged in the high-pressure area of the engine, in particular upstream a SCR.

14. Exhaust housing (2) according to any one of claims 10 to 13, **characterized in that** the activation elements (8) are electrical motors.

15. Method for installing a valve (1) according to any one of claims 1 to 9 in an exhaust housing (2) comprising the steps of:
- positioning a valve (1) as previously described in an exhaust housing (2),
- positioning the first part (7a) of the at least one flap rotary axis (7) of the valve (1) such that the second part (7b) of the flap rotary axis (7) is connectable with the first part (7a) through an opening an a structural element of the exhaust housing,
- connecting the first part (7a) of the flap rotary axis (7) with the second part (7b) of the flap rotary axis (7).

## Patentansprüche

1. Ventil (1) für ein Abgasgehäuse (2) eines Schiffes, insbesondere eines Großschiffes, mit einem Rahmen (3), der zumindest ein erstes (4) und ein zweites (5) Seitenelement aufweist, mit zumindest einer Klappe (6), die eine Klappen-drehachse (7) aufweist, wobei die mindestens eine Klappe (6) innerhalb des Rahmens (3) angeordnet ist, und ein Betätigungselement (8) zum zumindest teilweisen Drehen der mindestens einen Klappe um die Klappendrehachse (7), **dadurch gekennzeichnet, dass** das Betätigungselement (8) außerhalb des Rahmens (3) angeordnet ist und in einem Abstand D in einem Bereich zwischen 30 mm bis 300 mm, insbesondere 50 mm bis 100 mm, vorzugsweise im Wesentlichen 70 mm, von dem ersten Seitenelement (4) angeordnet ist, so dass ein Strukturelement des Abgasgehäuses zwischen Betätigungselement (8) und Seitenelement (4) angeordnet werden kann, wobei die Klappendrehachse (7) zwei Teile umfasst, die durch eine Öffnung des Strukturelements des Abgasgehäuses miteinander verbunden werden können, wobei ein erster Teil (7a) im Wesentlichen innerhalb des Rahmens angeordnet ist und ein zweiter Teil (7b) im Wesentlichen außerhalb des Rahmens (3) angeordnet ist.

2. Ventil (1) nach einem der vorhergehenden Ansprüche, **dadurch gekennzeichnet, dass** die Klappendrehachse (7) im Wesentlichen in der Mitte der Klappe angeordnet ist und sich entlang einer Längsachse der Klappe erstreckt.

3. Ventil (1) nach einem der vorhergehenden Ansprüche, **dadurch gekennzeichnet, dass** das Ventil (1) mindestens zwei, vorzugsweise drei, besonders bevorzugt vier, insbesondere sechs, Klappen (6) aufweist.

4. Ventil (1) nach einem der vorhergehenden Ansprüche, **dadurch gekennzeichnet, dass** die Klappendrehachse (7) eine Länge L_{R} aufweist, die mindestens 105%, vorzugsweise mindestens 110%, noch bevorzugter mindestens 120% der Länge der Klappe L_{fl} entspricht.

5. Ventil (1) nach einem der vorhergehenden Ansprüche, **dadurch gekennzeichnet, dass** der zweite Teil (7b) der Klappendrehachse (7) mit dem Betätigungselement (8) verbunden ist.

6. Ventil (1) nach einem der vorhergehenden Ansprüche, **dadurch gekennzeichnet, dass** eine Verbindung zwischen dem ersten Teil (7a) und dem zweiten Teil (7b) eine Sechskantverbindung ist.

7. Ventil (1) nach einem der vorangehenden Ansprüche, **dadurch gekennzeichnet, dass** eine Länge des ersten Teils (7a) länger ist als eine Länge des zweiten Teils (7b).

8. Ventil (1) nach einem der vorhergehenden Ansprüche, **dadurch gekennzeichnet, dass** die Klappendrehachse (7) in Lagern in den Seitenelementen (4, 5), vorzugsweise in einem Keramikgleitlager und/oder einem Graphitgleitlager, angeordnet ist.

9. Ventil (1) nach einem der vorhergehenden Ansprüche, **dadurch gekennzeichnet, dass** die Klappendrehachse (7) in mindestens einem Lager innerhalb des Rahmens (3) zwischen den Seitenelementen (4, 5) angeordnet ist, vorzugsweise in einem Keramikgleitlager und/oder einem Graphitgleitlager.

10. Abgasgehäuse (2) eines großen Schiffes, insbesondere eines Großschiffes, mit einem Wandabschnitt (9) und mindestens einer Klappe (1) nach einem der vorhergehenden Ansprüche, **dadurch gekennzeichnet, dass** die mindestens eine Klappendrehachse (7) durch eine Öffnung im Wandabschnitt (9) verläuft.

11. Abgasgehäuse (2) nach Anspruch 10, **dadurch gekennzeichnet, dass** der Wandabschnitt (9) eine konstruktive Platte des Abgasgehäuses ist.

12. Abgasgehäuse (2) nach einem der Ansprüche 10 oder 11, **dadurch gekennzeichnet, dass** die Betätigungselemente (8) außerhalb des Abgasgehäuses (2) angeordnet sind.

13. Abgasgehäuse (2) nach einem der Ansprüche 10 bis 12, **dadurch gekennzeichnet, dass** das Ventil (1) im Hochdruckbereich des Motors, insbesondere stromaufwärts eines SCR, angeordnet ist.

14. Abgasgehäuse (2) nach einem der Ansprüche 10 bis 13, **dadurch gekennzeichnet, dass** die Betätigungselemente (8) Elektromotoren sind.

15. Verfahren zum Einbau eines Ventils (1) nach einem der Ansprüche 1 bis 9 in ein Abgasgehäuse (2), das die folgenden Schritte umfasst:
- Positionieren eines Ventils (1) wie zuvor beschrieben in einem Abgasgehäuse (2),
- Positionieren des ersten Teils (7a) der mindestens einen Klappen-Drehachse (7) des Ventils (1) derart, dass der zweite Teil (7b) der Klappen-Drehachse (7) mit dem ersten Teil (7a) durch eine Öffnung in einem Strukturelement des Abgasgehäuses verbindbar ist,
- Verbinden des ersten Teils (7a) der Klappendrehachse (7) mit dem zweiten Teil (7b) der Klappendrehachse (7).

## Revendications

1. Vanne (1) pour un carter d'échappement (2) d'un navire, en particulier d'un grand navire, comprenant un cadre (3) ayant au moins un premier (4) et un second (5) élément latéral, au moins un volet (6) ayant un axe de rotation de volet (7), le au moins un volet (6) étant disposé à l'intérieur du cadre (3) et un élément d'activation (8) pour faire tourner le au moins un volet au moins partiellement autour de l'axe de rotation de volet (7), **caractérisé en ce que** l'élément d'activation (8) est disposé à l'extérieur du cadre (3) et à une distance D dans une plage comprise entre 30 mm et 300 mm, en particulier de 50 mm à 100 mm, de préférence sensiblement 70 mm, par rapport au premier élément latéral (4), de sorte qu'un élément structurel du carter d'échappement peut être disposé entre l'élément d'activation (8) et l'élément latéral (4), l'axe de rotation de volet (7) comprenant deux parties qui peuvent être reliées l'une à l'autre par une ouverture de l'élément structurel du carter d'échappement, une première partie (7a) étant disposée sensiblement à l'intérieur du cadre et une deuxième partie (7b) étant disposée sensiblement à l'extérieur du cadre (3).

2. Vanne (1) selon l'une quelconque des revendications précédentes, **caractérisée en ce que** l'axe de rotation de volet (7) est disposé essentiellement au milieu du clapet et s'étend selon un axe longitudinal du clapet.

3. Vanne (1) selon l'une quelconque des revendications précédentes, **caractérisée en ce que** la vanne (1) comprend au moins deux, de préférence trois, plus préférentiellement quatre, notamment six, volets (6).

4. Vanne (1) selon l'une quelconque des revendications précédentes, **caractérisée en ce que** l'axe de rotation de volet (7) a une longueur L_{R} qui correspond à au moins 105%, de préférence au moins 110%, plus préférentiellement au moins 120% de la longueur du clapet L_{fl}.

5. Vanne (1) selon l'une quelconque des revendications précédentes, **caractérisée en ce que** la deuxième partie (7b) de l'axe de rotation du volet (7) est reliée à l'élément d'activation (8).

6. Vanne (1) selon l'une quelconque des revendications précédentes, **caractérisée en ce qu'**une liaison entre la première partie (7a) et la deuxième partie (7b) est une liaison par clé hexagonale.

7. Vanne (1) selon l'une quelconque des revendications précédentes, **caractérisée en ce qu'**une longueur de la première partie (7a) est supérieure à une longueur de la deuxième partie (7b).

8. Vanne (1) selon l'une quelconque des revendications précédentes, **caractérisée en ce que** l'axe de rotation du volet (7) est disposé dans des paliers dans les éléments latéraux (4, 5), de préférence dans un palier lisse en céramique et/ou un palier lisse en graphite.

9. Vanne (1) selon l'une quelconque des revendications précédentes **caractérisée en ce que** l'axe de rotation du volet (7) est disposé dans au moins un palier à l'intérieur du cadre (3) entre les éléments latéraux (4,5), de préférence dans un palier à glissière en céramique et/ou un palier à glissière en graphite.

10. Carter d'échappement (2) d'un grand navire, notamment d'un grand navire, comprenant un tronçon de paroi (9) et au moins une vanne (1) selon l'une quelconque des revendications précédentes, **caractérisé en ce que** le au moins un axe de rotation de volet (7) s'étend à travers une ouverture du tronçon de paroi (9).

11. Carter d'échappement (2) selon la revendication 10, **caractérisé en ce que** la section de paroi (9) est une plaque structurelle du carter d'échappement.

12. Carter d'échappement (2) selon l'une quelconque des revendications 10 ou 11, **caractérisé en ce que** les éléments d'activation (8) sont disposés à l'extérieur du carter d'échappement (2).

13. Carter d'échappement (2) selon l'une quelconque des revendications 10 à 12 **caractérisé en ce que** la vanne (1) est disposée dans la zone haute pression du moteur, notamment en amont d'une SCR.

14. Carter d'échappement (2) selon l'une quelconque des revendications 10 à 13, **caractérisé en ce que** les éléments d'activation (8) sont des moteurs électriques.

15. Procédé d'installation d'une vanne (1) selon l'une quelconque des revendications 1 à 9 dans un carter d'échappement (2) comprenant les étapes suivantes :
- positionner une vanne (1) telle que décrite précédemment dans un carter d'échappement (2),
- positionner la première partie (7a) d'au moins un axe de rotation de volet (7) de la vanne (1) de sorte que la deuxième partie (7b) de l'axe de rotation de volet (7) puisse être connectée à la première partie (7a) à travers une ouverture d'un élément structurel du boîtier d'échappement,
- connecter la première partie (7a) de l'axe de rotation du volet (7) avec la seconde partie (7b) de l'axe de rotation du volet (7).
